Europäisches Patentamt

**European Patent Office**

**Office européen des brevets**

(11) Veröffentlichungsnummer: **0 108 267**
**A1**

(12) **EUROPÄISCHE PATENTANMELDUNG**

(21) Anmeldenummer: 83110036.7

(22) Anmeldetag: 07.10.83

(51) Int. Cl.³: **C 01 B 33/28**

(30) Priorität: 13.10.82 DE 3237916

(43) Veröffentlichungstag der Anmeldung:
16.05.84 Patentblatt 84/20

(84) Benannte Vertragsstaaten:
DE FR GB IT NL

(71) Anmelder: HOECHST AKTIENGESELLSCHAFT
Postfach 80 03 20
D-6230 Frankfurt am Main 80(DE)

(72) Erfinder: Rieck, Hans-Peter, Dr.
Staufenstrasse 13a
D-6238 Hofheim am Taunus(DE)

(72) Erfinder: Kalz, Hans-Jürgen, Dr.
Gartenstrasse 25
D-6238 Hofheim am Taunus(DE)

(54) Verfahren zur Herstellung von Zeolithen.

(57) Die Erfindung betrifft ein Verfahren zur Herstellung von silikatreichen Zeolithen des ZSM-5-Typs durch Erhitzen einer wäßrigen Lösung oder Suspension, die eine Silizium-Quelle, Alkalihydroxyd sowie gegebenenfalls eine Aluminiumoxid-Quelle enthält, bis eine Kristallisation eintritt. Ferner enthält die Lösung oder Suspension eine organische Phosphorverbindung der Formel $P(X) R^1R^2R^3$, wobei X Sauerstoff bedeutet, aber auch fehlen kann und $R^1$, $R^2$ und $R^3$ unabhängig voneinander $C_2$-$C_{10}$-Alkylgruppen oder $C_2$-$C_{10}$ Alkoxygruppen bedeuten.

EP 0 108 267 A1

HOECHST AKTIENGESELLSCHAFT    HOE 82/F 203    Dr.SP/mü

0108267

## Verfahren zur Herstellung von Zeolithen

Die Erfindung bezieht sich auf ein Verfahren zur Herstellung synthetischer kristalliner, silikatreicher Alumino-Silikat-Zeolithe des ZSM-5-Typs, wobei unter den Begriff "Zeolithe des ZSM-5-Typs" hier auch der Zeolith ZSM-11 fallen soll.

Verschiedene Zeolithe haben große technische Bedeutung erlangt, da sie als Ionenaustauscher, Molekularsiebe und Katalysatoren eingesetzt werden können. In letzter Zeit finden Zeolithe vom ZSM-5-Typ zunehmendes Interesse, da sie bei verschiedenen Alkylierungen und Isomerisierungen katalytisch sehr wirksam sind und die Umwandlung von Methanol in gesättigte Kohlenwasserstoffe, Olefine und Aromaten katalysieren.

Für die Herstellung der Zeolithe ZSM-5 und ZSM-11 werden üblicherweise organische Stickstoff enthaltende Kationen, insbesondere Tetraalkylammonium-Kationen, verwendet (US-PS 3 702 886 und 3 709 979). Es ist ferner bekannt, den Zeolith ZSM-11 in Gegenwart von Tetraalkylphosphonium-Kationen herzustellen (US-PS 3 709 979).

Da quaternäre Ammoniumsalze, insbesondere aber quaternäre Phosphoniumsalze, teilweise schwer zugänglich und teuer sind, bestand die Aufgabe, ein Verfahren zur Herstellung von Zeolithen des ZSM-5-Typs anzugeben, das mit leicht zugänglichen Verbindungen auskommt.

Die vorliegende Erfindung löst dieses Problem dadurch, daß anstelle der bekannten organischen Phosphonium-Salze bestimmte nicht-salzartige Phosphorverbindungen eingesetzt werden.

Es wurde nun ein Verfahren zur Herstellung von silikatreichen Zeolithen des ZSM-5-Typs durch Erhitzen einer wäßrigen Lösung oder Suspension, die eine Siliziumdioxid-Quelle, eine organische Phosphorverbindung, Alkalihydroxid sowie gegebenenfalls eine Aluminiumoxid-Quelle enthält, bis eine Kristallisation eintritt, gefunden, das dadurch gekennzeichnet ist, daß die organische Phosphorverbindung die Formel P(X) $R^2R^2R^3$ aufweist, wobei

X Sauerstoff bedeutet, aber auch fehlen kann und $R^1$, $R^2$ und $R^3$ unabhängig voneinander $C_2-C_{10}$-Alkylgruppen oder $C_2-C_{10}$-Alkoxygruppen bedeuten.

Die $SiO_2$-Quelle kann aktive Kieselsäure, wie z. B. pyrogene Kieselsäure, oder kolloidale Kieselsäure sein. Andere, verwendbare $SiO_2$-Quellen sind aus der Europäischen Offenlegungsschrift 54386 bekannt. Bevorzugt wird im allgemeinen das preiswerte Wasserglas.

Alkalihydroxid kann in freier Form oder in Form des Alkalioxidanteils des zugegebenen Wasserglases oder Alkalialuminats verwendet werden. Jedoch können auch andere alkalisch reagierende Salze, wie z. B. Alkalicarbonat, zugesetzt werden. Unter den Alkaliverbindungen sind die Natriumverbindungen bevorzugt. Es ist bevorzugt, wenn der pH-Wert der zu erhitzenden wäßrigen Lösung oder Suspension im Bereich von 8 bis 12 liegt. Es ist zulässig, zur Einstellung des pH-Werts eine Säure, beispielsweise Schwefelsäure oder Phosphorsäure, dem Reaktionsansatz zuzufügen. Bei niedrigen Molverhältnissen von $OH^{\ominus}/SiO_2$ werden kürzere Reaktionszeiten benötigt; jedoch steigt dabei die Gefahr, daß amorphe Anteile auftreten.

In den Zeolithen, die nach dem erfindungsgemäßen Verfahren hergestellt werden, muß nicht notwendigerweise Aluminium enthalten sein. Geringe Aluminiumgehalte können jedoch auch ohne Zugabe eigener Aluminiumoxidquellen auftreten, wenn von technischem Wasserglas ausgegangen wird, das Aluminium als Verunreinigung enthält. Werden höhere Aluminium-Gehalte angestrebt, so kann man dem Reaktionsansatz eine Aluminiumverbindung, beispielsweise frisch gefälltes Aluminiumhydroxid, Natriumaluminat oder Aluminiumsulfat zusetzen.

Beim erfindungsgemäßen Verfahren wird meist eine Reaktionsmischung hergestellt, die die folgende molare Zusammensetzung aufweist:

$Al_2O_3$ / $SiO_2$      0 - 0,05, vorzugsweise 0,002 - 0,04, insbesondere 0,004 - 0,025

Alkalioxid / $SiO_2$    0,001 - 1, vorzugsweise 0,01 - 0,5

$H_2O$ / $SiO_2$      5 - 200, vorzugsweise 15 - 80

org. Phosphorverbindung / $SiO_2$     0.005 - 1, vorzugsweise 0.01 - 0.5, insbesondere 0,02 - 0.4

Der nach dem erfindungsgemäßen Verfahren hergestellte silikatreiche Zeolith des ZSM-5-Typs hat ein Atomverhältnis Al : Si von 0 bis 0,1.

Das Röntgenbeugungsspektrum zeigt u.a. Reflexe zumindest mittlerer Intensität bei d-Werten von $11.2 \pm 0,5$; $10,0 \pm 0.5$; $3.9 \pm 0.05$; $3.8 \pm 0.05$; $3.75 \pm 0.05$; $3.70 \pm 0.05$.

Neben Aluminium können in das Zeolithgitter noch verschiedene andere Elemente, z. B. Bor, Indium, Gallium, Arsen, Antimon sowie Elemente der 1. bis 8. Nebengruppe des Periodensystems, wie Zirkon, Vanadin, Eisen oder Chrom eingebaut werden. Die Menge an Metall, die in den Zeolith eingebaut wird, kann bis etwa 25 Gew.-% betragen. Bei geringen Anteilen dieser Elemente wird die Kristallstruktur des Zeoliths nicht wesentlich verändert.

Es ist bevorzugt, wenn beim erfindungsgemäßen Verfahren die organische Phosphorverbindung mindestens eine $C_2$-$C_{20}$-Alkylgruppe, vorzugsweise jedoch drei $C_2$-$C_{20}$-Alkylgruppen, enthält. Vorzugsweise werden Phosphorverbindungen mit $C_2$-$C_4$-Alkylresten und/oder $C_2$-$C_4$-Alkoxyresten verwendet.

Als Phosphorverbindungen vom Typ $P(X)R^1R^2R^3$ können Verbindungen eingesetzt werden, bei denen $R^1$, $R^2$ und $R^3$ verschieden sind, aber bevorzugt werden die leichter zugänglichen Verbindungen mit drei gleichen Gruppen. Als Beispiele seien genannt: Tripropylphosphan, Tributylphosphan oder Tributylphosphanoxid. Insbesondere diese Verbindungen sind zur Synthese geeignet, aber auch Tributylphosphat oder längerkettige Verbindungen, wie Trioctylphosphanoxid. Bevorzugt sind beim erfindungsgemäßen Verfahren solche Phosphorver-

- 4 -

0108267

bindungen, die den Gruppen der Trialkylphosphane, Trialkylphosphanoxide, Alkylester der Phosphin-, Phosphon- und Phosphorsäure zuzuordnen sind.

Die nach dem erfindungsgemäßen Verfahren gewonnenen Zeolithe enthalten im Kristallverband noch einen Teil der organischen Phosphor-Verbindung eingeschlossen. Um die katalytische Reaktivität des Zeoliths zu erhöhen, ist es erforderlich, die organische Phosphor-Verbindung zu zerstören. Hierzu wird der Zeolith etwa für 1 bis 2 Stunden auf ca. 500 bis 600°C erhitzt. Dies kann in Gegenwart von Sauerstoff erfolgen. Anschließend läßt sich in wäßriger Suspension das Alkalimetallion des Zeoliths gegen Ammoniumion oder gegen andere Dotierungselemente austauschen, z. B. gegen die Elemente der 1. bis 8. Nebengruppe. Sofern auf diese Weise die Ammoniumform des Zeoliths hergestellt wurde, läßt sich in dieser durch ein zweites Kalzinieren (mit oder ohne Sauerstoff) auch das Ammoniumion zerstören. Dabei entsteht ein Zeolith in der H-Form, der sich besonders gut für katalytische Zwecke eignet.

Beim erfindungsgemäßen Verfahren beträgt die Reaktionstemperatur in den meisten Fällen 100 bis 200°C. Bevorzugt arbeitet man bei Temperaturen zwischen 150 und 200°C. Die Reaktion wird dabei hydrothermal unter dem Eigendruck durchgeführt, der sich über der Reaktionsmischung einstellt. Die Reaktionszeit wird so bemessen, daß der Zeolith auskristallisiert ist. Hierfür sind mitunter nur wenige Stunden notwendig. Es können jedoch auch Reaktionszeiten von mehreren Tagen erforderlich sein.

Die nach dem erfindungsgemäßen Verfahren hergestellten Zeolithe zeigen Molsiebeigenschaften und sind deshalb zu Adsorptionszwecken einsetzbar. Weiterhin sind sie als Katalysatoren, beispielsweise für Crack- oder Hydrocrack-Verfahren, für Isomerisierungsreaktionen, Alkylierungen und für die Methanolumwandlung verwendbar.

Die Erfindung wird durch die Beispiele näher erläutert.

Beispiel 1

Die Reaktionsmischung hat folgende molare Zusammensetzung:

$0,303\ Na_2O : 0,0052\ Al_2O_3 : SiO_2 : 41,2\ H_2O : 0,060\ P_2O_5 : 0,1\ P\ R^1R^2R^3$

Sie wird hergestellt, indem 222,56 g technisches Wasserglas (27 % $SiO_2$, 8,43 % $Na_2O$, 0,24 % $Al_2O_3$) zu 594,4 g Wasser gegeben werden. Danach werden 20,2 g Tributylphosphan und 13,89 g Phosphorsäure (85 %ig) zugefügt. Die Reaktionsmischung wird fünf Stunden bei 180°C in einem Edelstahl-Autoklaven (Volumen: 2 l) unter autogenem Druck gerührt. Nach dem Abkühlen wird die Reaktionsmischung filtriert, mit Wasser gewaschen und zwei Stunden bei 170°C getrocknet. Das Produkt zeigt das Röntgendiagramm der Tabelle 1. Der Zeolith hat die molare Zusammensetzung

$0,0079\ Al_2O_3 : 0,012\ Na_2O : SiO_2$

Nach zweistündigem Kalzinieren bei 550°C an Luft zeigt die Substanz das Röntgenbeugungsdiagramm der Tabelle 2.

Beispiel 2

Die Reaktionsmischung hat folgende Zusammensetzung:

$0,303\ Na_2O : 0,0052\ Al_2O_3 : SiO_2 : 40,9\ H_2O : 0,1\ P\ R^1R^2R^3$

Die Reaktionsmischung wird hergestellt, indem 222,56 g technisches Wasserglas (27 % $SiO_2$, 8,43 % $Na_2O$, 0,24 % $Al_2O_3$) zu 594,4 g $H_2O$ gegeben werden. Danach werden 20,2 g Tributylphosphan zugefügt. Die Reaktionsmischung wird 21 Stunden bei 160°C in einem Edelstahl-Autoklaven (Volumen: 2 l) unter autogenem Druck gerührt. Nach dem Abkühlen wird die Reaktionsmischung filtriert, mit Wasser gewaschen und zwei Stunden bei 170°C getrocknet. Das Röntgenbeugungsbild zeigt die ZSM-5-artige Struktur des dargestellten Zeolith (sehr ähnliches Röntgenbeugungsbild wie das in Tabelle 1).

Beispiel 3

Die Reaktionsmischung hat folgende molare Zusammensetzung:

$$0,303\ Na_2O : 0,0052\ Al_2O_3 : SiO_2 : 41,2\ H_2O : 0,060\ P_2O_5 : 0,1\ P(X)R^1R^2R^3$$

Sie wird aus 222,56 g technischem Wasserglas und 594,4 g $H_2O$ hergestellt. Danach werden 17,6 g Tripropylphosphanoxid und 13,89 g Phosphorsäure (85 %ig) zugefügt. Die Reaktionsmischung wird 21 Stunden bei 160°C in einem Edelstahl-Autoklaven unter autogenem Druck gerührt und, wie in Beispiel 2 beschrieben, aufgearbeitet. Das Röntgenbeugungsdiagramm zeigt ZSM-5-artige Struktur des Produktes.

Beispiel 4

Die Umsetzung wird, wie in Beispiel 3 beschrieben, durchgeführt. Anstelle des Tripropylphosphanoxids werden 16,0 g Tripropylphosphan eingesetzt. Das Röntgenbeugungsdiagramm zeigt ZSM-5-artige Struktur des Produktes.

Beispiel 5

Die Umsetzung wird, wie in Beispiel 3 beschrieben, durchgeführt. Anstelle des Tripropylphosphanoxids werden 22,5 g Tributylphosphanoxid eingesetzt. Das Röntgenbeugungsdiagramm zeigt ZSM-5-artige Struktur des Produktes.

Beispiel 6

Die Umsetzung wird, wie in Beispiel 1 beschrieben, durchgeführt. Lediglich die Reaktionszeit wird auf zwei Stunden bei 180°C verkürzt. Das Röntgenbeugungsdiagramm weist auf eine ZSM-5-artige Struktur mit 95 % Kristallinität (bezogen auf das Produkt von Beispiel 1 mit 100 %) hin. Der Gehalt an kristallinem ZSM-5-artigem Material wird bestimmt durch das Verhältnis der Intensitäten des Röntgenreflexes bei einem Netzebenabstand d von 3,87 bezogen auf das entsprechende Signal in Beispiel 1.

Beispiel 7

Die Umsetzung wird, wie in Beispiel 1 beschrieben, durchgeführt. Die Reaktionszeit beträgt eine Stunde bei 208°C. Das Röntgenbeugungsdiagramm zeigt eine ZSM-5-artige Struktur mit einer im Vergleich zu Beispiel 1 auf etwa 67 % verminderten Kristallinität.

Beispiele 8 - 10

Die Umsetzungen werden, wie in Beispiel 1 beschrieben, durchgeführt. Verändert wird Reaktionszeit und Anteil an Phosphorverbindung.

8. $P\ R^1R^2R^3$ : $SiO_2$ = 0,05; 2 h 177°C; 100 % ZSM-5-artig

9. $P\ R^1R^2R^3$ : $SiO_2$ = 0,02; 2 h 180°C; 38 % ZSM-5-artig + amorph

10. $P\ R^1R^2R^3$ : $SiO_2$ = 0,01; 2 h 177°C; 35 % ZSM-5-artig + amorph

Beispiel 11

Die Reaktionsmischung hat folgende molare Zusammensetzung:

0,303 $Na_2O$ : 0,0052 $Al_2O_3$ : $SiO_2$ : 41,2 $H_2O$ : 0,060 $P_2O_5$ : 0,1 $P(X)R^1R^2R^3$

Die Reaktionsmischung wird hergestellt, indem 222,56 g technisches Wasserglas zu 594,4 g $H_2O$ gegeben werden. Danach werden 26,6 g Tributylphosphat und 13,89 g Phosphorsäure (85 %ig) zügeführt. Die Reaktionsmischung wird 2.5 h bei 175°C in einem Edelstahl-Autoklaven unter autogenem Druck gerührt und, wie in Beispiel 2 beschrieben, aufgearbeitet. Das Röntgenbeugungsdiagramm zeigt eine ZSM-5-artige Struktur mit einer im Vergleich zu Beispiel 1 auf etwa 26 % verminderten Kristallinität.

Beispiel 12

Die Umsetzung wird, wie in Beispiel·11 beschrieben, durchgeführt. Die Reaktionszeit beträgt sechs Stunden. Die Kristallinität beträgt etwa 38 %.

Beispiel 13

Die Reaktionsmischung hat folgende molare Zusammensetzung:

$0,303 \ Na_2O : 0,0252 \ Al_2O_3 : SiO_2 : 41,6 \ H_2O : 0,06 \ SO_3 :$
$0,060 \ P_2O_5 : 0,046 \ P(X)R^1R^2R^3$

Die Reaktionsmischung wird hergestellt, indem 222,56 g technisches Wasserglas zu 594,4 g $H_2O$ gegeben werden. Danach werden 10,0 g Tributylphosphanoxid, 13,33 g $Al_2(SO_4)_3$ 18 $H_2O$ und 13,89 g Phosphorsäure (85 %ig) zugefügt. Die Reaktionsmischung wird drei Stunden bei $175^O$C in einem Edelstahl-Autoklaven unter autogenem Druck gerührt und, wie in Beispiel 2 beschrieben, aufgearbeitet. Das Röntgenbeugungsdiagramm zeigt eine ZSM-5-artige Struktur (74 % der Intensität des Produkts von Beispiel 1) des Produktes sowie als Nebenprodukt in geringer Konzentration Mordenit.

0108267

| TABELLE 1 | | TABELLE 2 | |
|---|---|---|---|
| Netzebenabstände $d(10^{-8}cm)$ | Relative Intensität $(100\ I/I_o)$ | Netzebenabstände $d(10^{-8}cm)$ | Relative Intensität $(100\ I/I_o)$ |
| 11,18 | 46 | 11,19 | 100 |
| 10,07 | 39 | 10,10 | 64 |
| 9,96 | 39 | 9,82 | 22 |
| 9,77 | 14 | 9,02 | 3 |
| 9,02 | 2 | 7,47 | 2 |
| 7,50 | 4 | 6,73 | 9 |
| 6,76 | 5 | 6,39 | 15 |
| 6,39 | 9 | 6,02 | 25 |
| 6,02 | 9 | 5,75 | 14 |
| 5,73 | 10 | 5,61 | 15 |
| 5,61 | 8 | 5,39 | 4 |
| 5,39 | 3 | 5,17 | 3 |
| 5,15 | 3 | 5,05 | 8 |
| 5,05 | 3 | 5,01 | 11 |
| 5,01 | 6 | 4,63 | 7 |
| 4,65 | 8 | 4,48 | 3 |
| 4,57 | 3 | 4,37 | 10 |
| 4,45 | 3 | 4,27 | 15 |
| 4,37 | 12 | 4,09 | 5 |
| 4,27 | 13 | 4,02 | 9 |
| 4,10 | 4 | 3,87 | 85 |
| 4,02 | 9 | 3,83 | 60 |
| 3,87 | 100 | 3,75 | 32 |
| 3,82 | 80 | 3,72 | 45 |
| 3,75 | 44 | 3,66 | 19 |
| 3,72 | 49 | 3,50 | 5 |
| 3,66 | 18 | 3,45 | 11 |
| 3,65 | 13 | 3,41 | 4 |
| 3,49 | 5 | 3,36 | 7 |
| 3,45 | 12 | 3,31 | 11 |
| 3,36 | 6 | 3,25 | 5 |
| 3,32 | 10 | 3,19 | 2 |
| 3,25 | 4 | 3,15 | 3 |
| 3,06 | 9 | 3,06 | 9 |
| 3,00 | 11 | 3,05 | 9 |
| 2,95 | 7 | 3,00 | 17 |
| 2,94 | 3 | 2,95 | 9 |
| 2,87 | 3 | 2,87 | 3 |
| 2,74 | 5 | 2,74 | 5 |
| 2,61 | 4 | 2,61 | 4 |
| 2,56 | 2 | 2,60 | 2 |
| 2,52 | 3 | 2,56 | 2 |
| 2,49 | 5 | 2,52 | 3 |
| 2,40 | 4 | 2,49 | 5 |
| 2,02 | 11 | 2,42 | 3 |
| 2,00 | 16 | 2,40 | 3 |
| | | 2,02 | 11 |
| | | 2,00 | 11 |

Patentansprüche:

1. Verfahren zur Herstellung von silikatreichen Zeolithen des ZSM-5-Typs durch Erhitzen einer wäßrigen Lösung oder Suspension, die eine Siliziumdioxid-Quelle, eine organische Phosphorverbindung, Alkalihydroxyd sowie gegebenenfalls eine Aluminiumoxid-Quelle enthält, bis eine Kristallisation eintritt, das dadurch gekennzeichnet ist, daß die organische Phosphorverbindung die Formel $P(X) R^1R^2R^3$ aufweist, wobei X Sauerstoff bedeutet, aber auch fehlen kann und $R^1$, $R^2$ und $R^3$ unabhängig voneinander $C_2-C_{10}$-Alkylgruppen oder $C_2-C_{10}$ Alkoxygruppen bedeuten.

2. Verfahren nach Anspruch 1, dadurch gekennzeichnet, daß Natriumhydroxyd als Alkalihydroxyd eingesetzt wird.

3. Verfahren nach Anspruch 1, dadurch gekennzeichnet, daß ein Alkalisilikat als Siliziumdioxid-Quelle eingesetzt wird.

4. Verfahren nach Anspruch 1, dadurch gekennzeichnet, daß der Rest $R^1$ eine $C_2-C_{10}$-Alkylgruppe darstellt.

5. Verfahren nach Anspruch 4, dadurch gekennzeichnet, daß $R^2$ und $R^3$, unabhängig voneinander, $C_2-C_{20}$-Alkylgruppen sind.

6. Verfahren nach Anspruch 1, dadurch gekennzeichnet, daß $R^1$, $R^2$ und $R^3$, unabhängig voneinander, $C_2-C_4$-Alkylreste oder $C_2-C_4$-Alkoxyreste sind.

7. Verfahren nach Anspruch 1, dadurch gekennzeichnet, daß die zu erhitzende wäßrige Lösung oder Suspension einen pH-Wert von 8 bis 12 aufweist.

8. Verfahren nach Anspruch 5, dadurch gekennzeichnet, daß als organische Phosphorverbindung Tripropylphosphan, Tributylphosphan, Tripropylphosphanoxid oder Tributylphosphanoxid eingesetzt wird.

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 287 166 (F.G. DWYER et al.)<br>* Spalte 4, Zeile 48 - Spalte 5, Zeile 30 *<br><br>--- | 1-6 | C 01 B 33/28 |
| D,A | US-A-3 709 979 (P. CHU)<br><br>----- | | |

**RECHERCHIERTE SACHGEBIETE (Int. Cl. 3)**

C 01 B 33/28

Der vorliegende Recherchenbericht wurde für alle Patentansprüche erstellt.

| Recherchenort | Abschlußdatum der Recherche | Prüfer |
|---|---|---|
| BERLIN | 13-01-1984 | KESTEN W |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82